# EUROPÄISCHE PATENTSCHRIFT

(11) **EP 2 526 285 B1**
(45) Veröffentlichungstag und Bekanntmachung des Hinweises auf die Patenterteilung: **26.02.2014**
(21) Anmeldenummer: 11718658.5
(22) Anmeldetag: 20.04.2011
(51) Int. Cl.: F03B 3/12, F03B 3/08, F03B 17/06, F03B 13/08

(54) **WASSERTURBINE**
WATER TURBINE
TURBINE HYDRAULIQUE

(30) Priorität: 29.04.2010 DE 102010018804
(43) Veröffentlichungstag der Anmeldung: 28.11.2012
(73) Patentinhaber: Voith Patent GmbH, 89522 Heidenheim (DE)
(72) Erfinder: HOLSTEIN, Benjamin, 89518 Heidenheim (DE); LOCHSCHMIDT, Jörg, 89075 Ulm (DE); PONTOW, Thomas, 27607 Langen-Debstedt (DE)
(74) Vertreter: Dr. Weitzel & Partner
(86) Internationale Anmeldenummer: PCT/EP2011/002010
(87) Internationale Veröffentlichungsnummer: WO 2011/134619

(56) Entgegenhaltungen:
- WO-A1-03/029645
- WO-A1-2007/055585
- WO-A1-2008/130940
- WO-A2-2009/153124
- FR-A1- 2 669 056
- GB-A- 2 447 514
- US-A- 1 493 154
- US-A- 4 272 685
- US-A1- 2004 013 510
- US-A1- 2007 216 245

## Beschreibung

Die Erfindung betrifft das Gebiet der Wasserturbinen oder Pumpturbinen. Solche Turbinen sind seit langem in einer großen Vielzahl von Varianten bekannt geworden.

Im Zuge der Verknappung und Verteuerung der Energie versucht man in zunehmendem Maße auch Wasserläufe mit geringen Fallhöhen und/oder Volumenströmen zu erschließen. Dabei werden auch Konstruktionen angewandt, die sich durch besonders einfachen Aufbau auszeichnen.

Aus US 4 755 690 B1 ist ein Wasserkraftwerk bekannt geworden, umfassend einen Damm, der quer zur Strömungsrichtung verläuft. Hierbei sind zahlreiche Energieeinheiten vorgesehen, jeweils umfassend einen Maschinensatz mit einer Turbine und einem Generator, die eine gemeinsame Welle aufweisen. Die einzelnen Maschinensätze sind in Zeilen nebeneinander und übereinander angeordnet und können mittels Hubeinrichtungen in ihre Arbeitsposition abgesenkt werden. Bei Flussläufen mit geringen Wassermengen und geringer Strömungsgeschwindigkeit beziehungsweise geringer Fallhöhe kommen nur einfache, robuste Konstruktionen der genannten Maschinensätze in Betracht. Dabei muss bei solchen Flussläufen mit jahreszeitlich bedingt unterschiedlichen Wassermengen gerechnet werden. Die Unterschiede zwischen Hochwasser und Niedrigwasser können sehr groß sein. Bei reißender Strömung, aber auch bei Niedrigwasser kommt es zu einer Mitnahme von Steinen, Treibholz oder sonstigen Körpern. Dabei besteht die Gefahr einer Beschädigung des Maschinensatzes sowie einer Verstopfung des Strömungskanales der Turbine.

Der Erfindung liegt die Aufgabe zugrunde, ein Wasserkraftwerk anzugeben, die sich besonders für die genannten Verhältnisse eignet, somit als Mini-Kraftwerk von robustem und einfachem Aufbau.

Diese Aufgabe wird durch die Merkmale von Anspruch 1 gelöst.

Demgemäß ist die Turbine des Kraftwerkes in besonderer Weise aufgebaut. Sie umfasst in üblicher Weise eine Anzahl von Turbinenblättern, die nach Art von Schiffsschrauben gestaltet sind. Das Laufrad umfasst ferner einen Ring, der die Drehachse des Laufrades umschließt und der die Turbinenblätter an seinem inneren Umfang trägt. Das Laufrad ist jedoch frei von einer Welle oder Nabe. Die Blätter sind somit nur an dem genannten Ring befestigt. Sie ragen mehr oder minder radial vom Ring aus zur Drehachse des Laufrades. An ihren freien Enden sind sie in keiner Weise fixiert. Vielmehr verbleibt zwischen den freien Enden der Turbinenblätter ein Durchlass, durch welchen jegliches Schwämmgut wie Steine, Treibholz und so weiter hindurchtreten kann.

Der Stator des Generators umschließt den Ring und dient diesem als Traglager.

Die aus Turbine und Generator bestehende Energieeinheit kann Anwendung in einem Flusskraftwerk finden, aber auch an anderen Stellen, an denen eine Strömung auftritt, beispielsweise in Küstenbereichen von Meeren.

Ein besonders interessanter Anwendungsfall ist die Anwendung in einem Damm, der in einem Flusslauf als Strömungshindernis installiert ist und der ganz allgemein der Flussregulierung dient, beispielsweise um hohe Strömungsgeschwindigkeiten abzubauen.

Die Erfindung ist anhand der Zeichnung näher erläutert. Darin ist im Einzelnen folgendes dargestellt:
- Figur 1: zeigt den grundsätzlichen Aufbau einer Energieeinheit mit Einlass und Saugrohr.
- Figur 2: zeigt ein nicht beanspruchtes Wasserkraftwerk mit zwei hintereinander geschalteten Energieeinheiten.
- Figur 3: zeigt eine Energieeinheit mit einer Kühleinrichtung.
- Figur 3.1: zeigt ein offenes Kühlsystem.
- Figur 3.2: zeigt ein geschlossenes Kühlsystem.
- Figur 4: zeigt eine Energieeinheit mit einer besonderen Gestaltung der Turbinenblätter.
- Figur 5: zeigt eine nicht beanspruchte Vorrichtung ähnlich jener wie gemäß Figur 4, jedoch in Tandemanordnung zweier Energieeinheiten.
- Figur 6: ist eine schematische nicht beanspruchte Gesamtdarstellung von Staudamm und Energieeinheiten.
- Figur 7: zeigt einen nicht beanspruchten Staudamm in perspektivischer Darstellung.
- Figur 8: zeigt in einer achssenkrechten Ansicht eine Turbine mit Teilen eines Generators.
- Figur 9: zeigt in einem Axialschnitt zwei axial hintereinander geschaltete Energieeinheiten eines nicht beanspruchten Wasserkraftwerks.
- Figur 10: ist eine schematische Aufrissansicht eines nicht beanspruchten Kraftwerkes in einer in Strömungsrichtung gelegten vertikalen Schnittebene.
- Figur 11: zeigt wiederum ein nicht beanspruchtes Kraftwerk in einer Darstellung analog zu jener gemäß Figur 10.
- Figur 12: zeigt ein weiteres nicht beanspruchtes Kraftwerk in einer Darstellung analog zu jener gemäß Figur 10.
- Figur 13: zeigt ein weiteres Kraftwerk in einer Darstellung analog zu jener gemäß Figur 10.
- Figur 14: zeigt ein weiteres nicht beanspruchtes Kraftwerk in einer Darstellung analog jener gemäß Figur 10.
- Figur 15: zeigt in einem vertikalen, in Strömungsrichtung gelegten Schnitt ein Wasserkraftwerk mit einer Kassette, die einschiebbar ist und eine Energieeinheit trägt.
- Figur 16: zeigt in schematischer Darstellung den Gegenstand von Figur 15.
- Figur 17: zeigt eine Energieeinheit im Axialschnitt.
- Figur 18: zeigt wiederum eine Energieeinheit in einem Axialschnitt mit einer Kühleinrichtung.
- Figur 19: zeigt ein Kraftwerk mit einer nabenlosen Turbine, an die eine umlaufende Auslaufhülse angeschlossen ist.
- Figur 20: zeigt eine Einzelheit zum Gegenstand gemäß Figur 19.

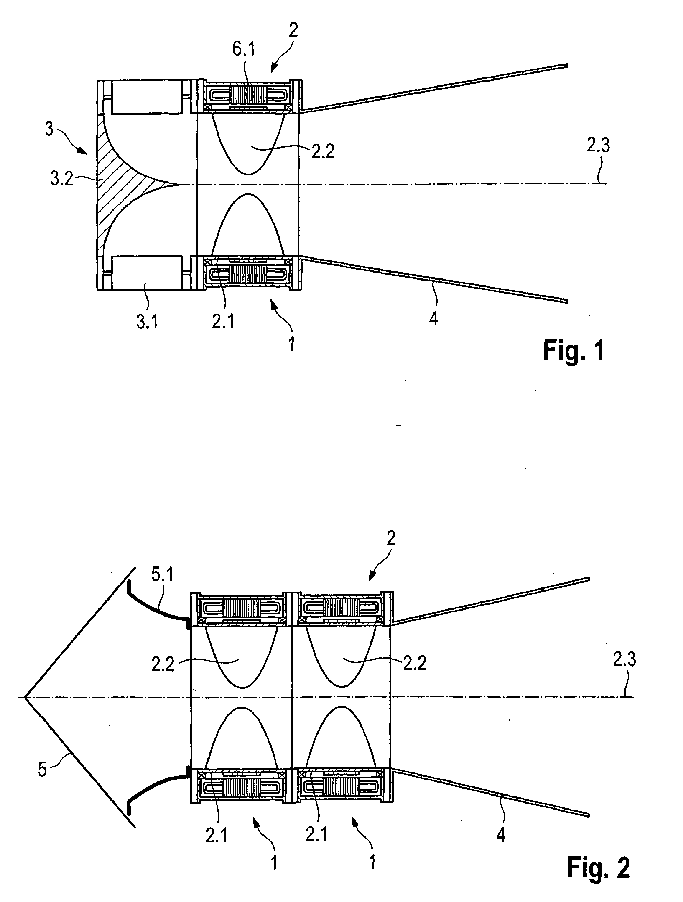

Figur 1 zeigt schematisch eine Energieeinheit 1 als wesentlichen Bestandteil eines Wasserkraftwerkes. Die Energieeinheit 1 umfasst eine Turbine mit einem Laufradring 2.1. Die Turbine ist von einem hier nicht gezeigten elektrischen Generator umschlossen. Der Turbine 2 ist ein Leitapparat 3 vorgeschaltet. Dieser weist feststehende oder verstellbare Leitschaufeln 3.1 auf. Dem Leitapparat 3 strömt Wasser in radialer Richtung zu. Es wird in Axialrichtung umgelenkt.

Der Energieeinheit ist ein Saugrohr 4 nachgeschaltet.

Die Turbine 2 ist in besonderer Weise gestaltet. Die Turbinenblätter 2.2 sind mit dem Laufradring 2.1 fest verbunden. Ihre radial inneren Enden reichen nicht bis zur Drehachse 2.3 der Turbine 2, sodass zwischen den Enden eine Öffnung verbleibt. Durch diese Öffnung kann vom Wasser mitgeführtes Treibgut hindurchtreten.

Die nicht beanspruchte in Figur 2 gezeigte Ausführungsform ist ähnlich wie jene gemäß Figur 1 gestaltet. Jedoch sind hierbei zwei Energieeinheiten 1, 1 vorgesehen.

Leitapparat 3 bildet eine sich verengenden Strömungskanal. Die Strömung verläuft ohne Umlenkung in Richtung der Drehachse 2.3.

Dem Leitapparat 3 ist ein Rechen 5 vorgeschaltet. Dieser hat die Form eines Kegels, was in der Darstellung als Pfeil erscheint. Der Rechen 5 könnte aber auch die Gestalt einer Kugelkalotte haben oder eben sein.

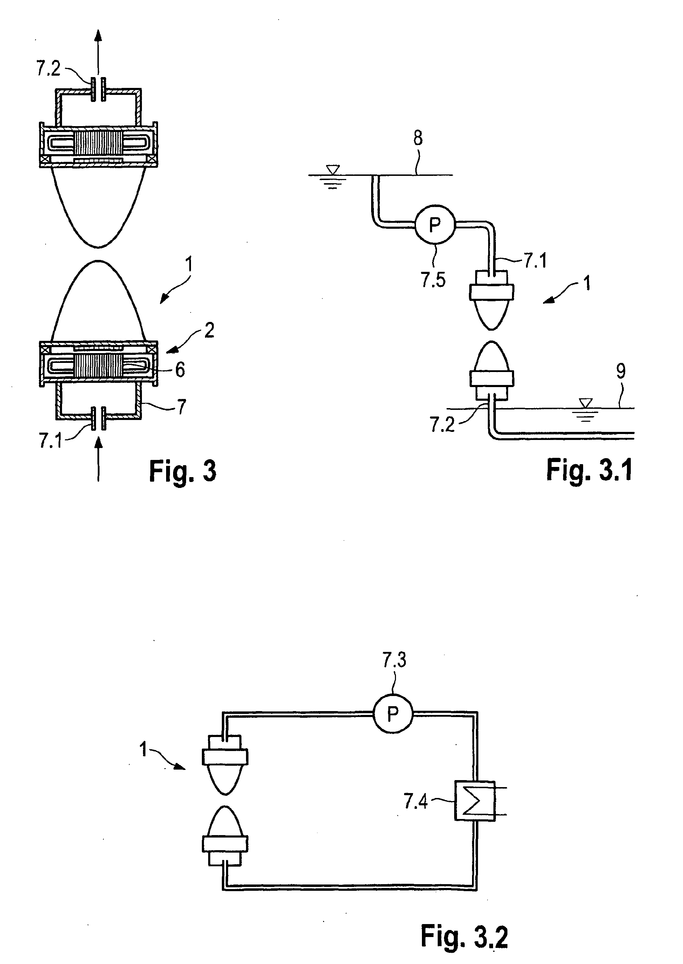

Figur 3 veranschaulicht sehr schematisch eine weitere Energieeinheit 1 mit einer Turbine 2 gemäß dem vorausgehend beschriebenen Baumuster. Die Turbine ist somit nabenlos.

Die Turbine ist von einer ringförmigen Kühlkammer 7 umschlossen. Diese weist einen Einlass 7.1 und einen Auslass 7.2 für Kühlmedium auf. Das Kühlsystem hat die Aufgabe, die in der Statoreinrichtung anfallende Wärme abzutransportieren.

Figur 3.1 veranschaulicht ein Durchlaufsystem, bei dem Kühlmedium aus dem Oberwasser 8 der Ringkammer durch Einlass 7.1 zuströmt und diese durch Auslass 7.2 wieder verlässt, und zum Unterwasser 9 strömt. Hierbei kann eine Pumpe 7.5 vorgesehen werden.

Figur 3.2 zeigt ein geschlossenes System mit einer Pumpe 7.3 und einer Kühleinrichtung 7.4. Geschlossene Systeme sind bei hohen Verschmutzungsgraden des Wassers vorzuziehen.

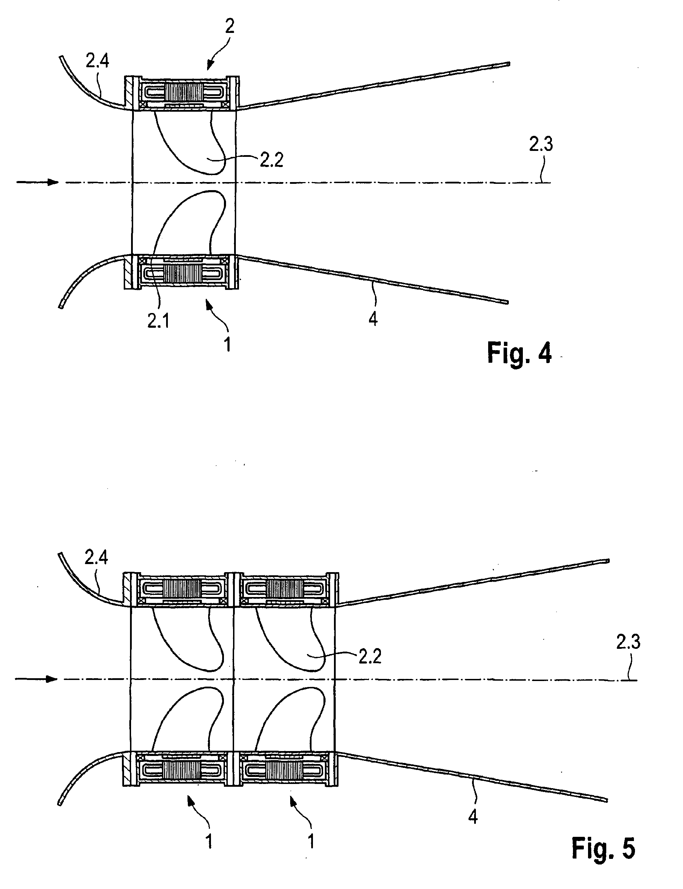

Die in Figur 4 dargestellte Energieeinheit 1 weist eine Turbine mit Turbinenblättern 2.2 besonderer Gestaltung auf. Wie man sieht, sind die Turbinenblätter in stromabwärtiger Richtung gekrümmt. Die freien Enden der Turbinenblätter 2.2 weisen somit in Richtung zum Unterwasser. Dies begünstigt ein Abführen von Treibgut, das im Wasser mitgeführt wird, und verhindern ein Anhängen von Fremdpartikeln an den Turbinenblättern 2.2.

Figur 5 zeigt eine ähnliche nicht beanspruchte Ausführungsform, jedoch mit zwei Energieeinheiten 1, 1.

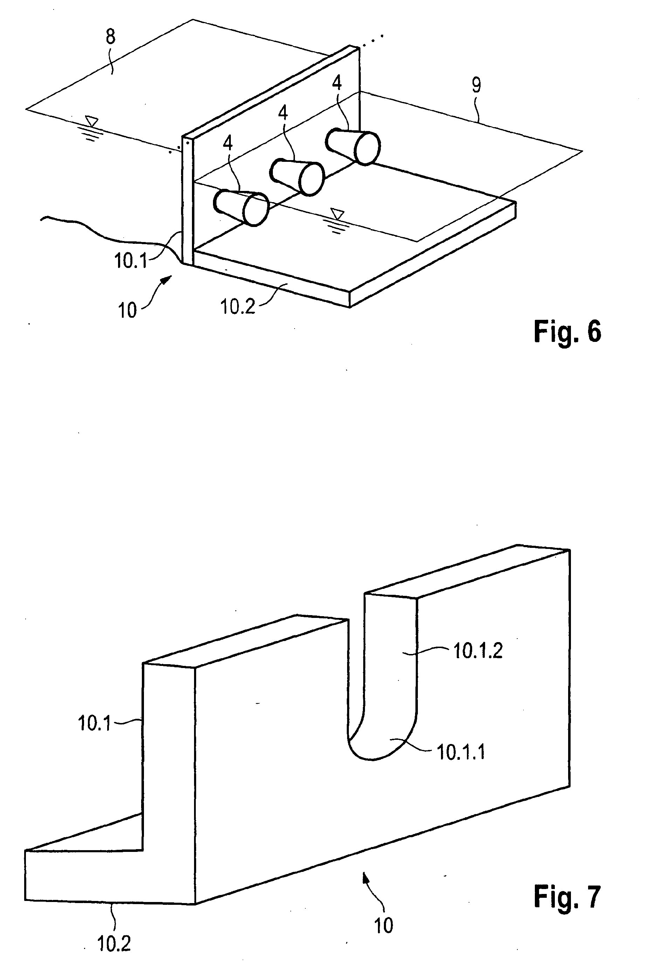

Figur 6 veranschaulicht einen nicht beanspruchten Staudamm 10. Dieser hat - in einem in Strömungsrichtung gelegten Vertikalschnitt - L-förmige Gestalt mit einem vertikalen Schenkel 10.1 und einem horizontalen Schenkel 10.2. Der vertikale Schenkel trägt drei Energieeinheiten mit Leitapparat und Saugrohr. Hier sieht man lediglich die Saugrohre 4. Es ist nur das Oberwasser 8 dargestellt.

Der in Figur 7 gezeigte nicht beanspruchte Staudamm 10 umfasst eine vertikale Wand 10.1 und einen Fuß 10.2. Der Staudamm befindet sich in einem Fluss. Der Fuß 10.2 ist auf das Flussbett aufgesetzt und mit der vertikalen Wand 10.1 starr verbunden. Der Fuß befindet sich auf der stromabwärtigen Seite.

In der vertikalen Wand 10.1 befindet sich eine Aussparung mit einem kreisrunden unteren Teil 10.1.1 und einem rechteckigen oberen Teil 10.1.2. Hier kann von oben her ein erfindungsgemäßer Maschinenteil eingesetzt, und auch wieder nach oben herausgezogen werden.

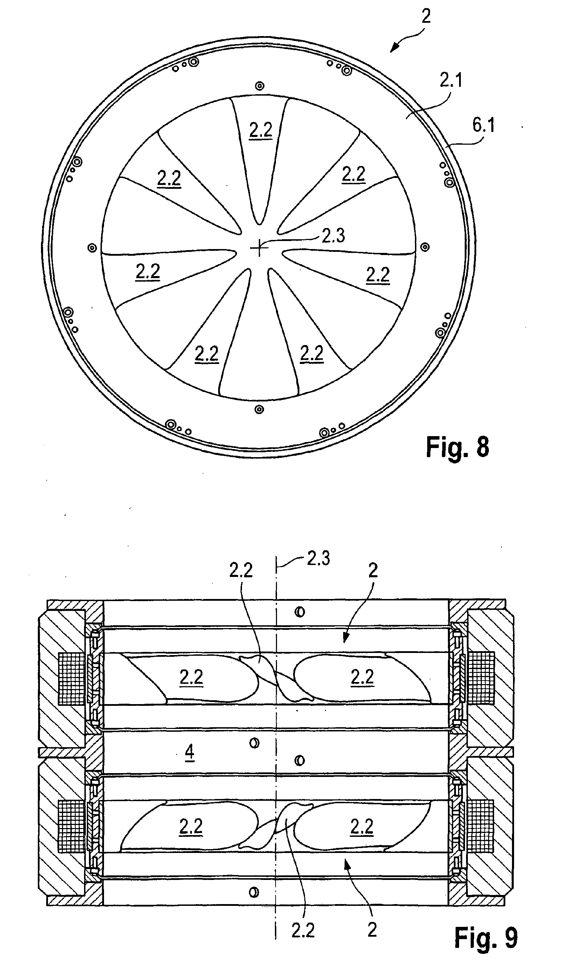

Figur 8 zeigt die Turbine 2. Sie weist eine Drehachse 2.3 auf, die zugleich die Drehachse des Generators 6 ist. Die Turbine weist eine Mehrzahl von Blättern 2.2 auf, ferner einen Laufradring 2.1. Die Blätter 2.2 sind mit dem Laufradring 2.1 fest verbunden. Sie sind an dessen Innenumfang fixiert.

Die radial inneren Enden der Blätter 2.2 hingegen sind völlig frei, da die Turbine 2 wellen- beziehungsweise nabenlos ist.

Radial innerhalb der Blätter 2.2 befindet sich ein mehr oder minder großer Freiraum. Beim Betrieb des Maschinensatzes können durch diesen Freiraum Schwämm- oder Treibkörper hindurchtreten.

Die Turbine ist von einem Generator 6 umschlossen. Zwischen Statorring 6.1 und Laufradring 2.1 befinden sich Axiallager 13, 13 und Radiallager 14, 14.

Figur 9 zeigt eine nicht beanspruchte Ausführungsform. Dabei sind zwei Maschinensätze, jeweils aus Turbine und Generator bestehend, axial hintereinander angeordnet. Durch diese Duplexanordnung ergibt sich während des Betriebes eine höhere Energieausbeute. Der Wirkungsgrad ist somit höher als bei einem einzelnen Maschinensatz mit nur einer einzigen Einheit aus Turbine und Generator. Außerdem ist die Duplexbauart flexibler im Betrieb, als nur eine Monobauart. So müssen nicht beide Einheiten gleichzeitig betrieben werden. Vielmehr kann die eine oder die andere Einheit abgeschaltet beziehungsweise zugeschaltet werden.

Man erkennt bei beiden Turbinen wiederum die Blätter 2.2, jeweils getragen vom Laufradring 2.1. Der Laufradring ist gelagert im Statorring 6.1.

Zwischen den beiden Einheiten ist ein Abstandsflansch vorgesehen. Den beiden Maschinensätzen ist ein Gehäuse zugeordnet.

Der axiale Abstand zwischen den beiden Turbinen sollte so klein wie möglich sein, beispielsweise 1 - 3 mm, oder kleiner als 1 mm.

Die beiden Generatoren sind derart ausgelegt, dass sie in gegenläufigem Sinne umlaufen.

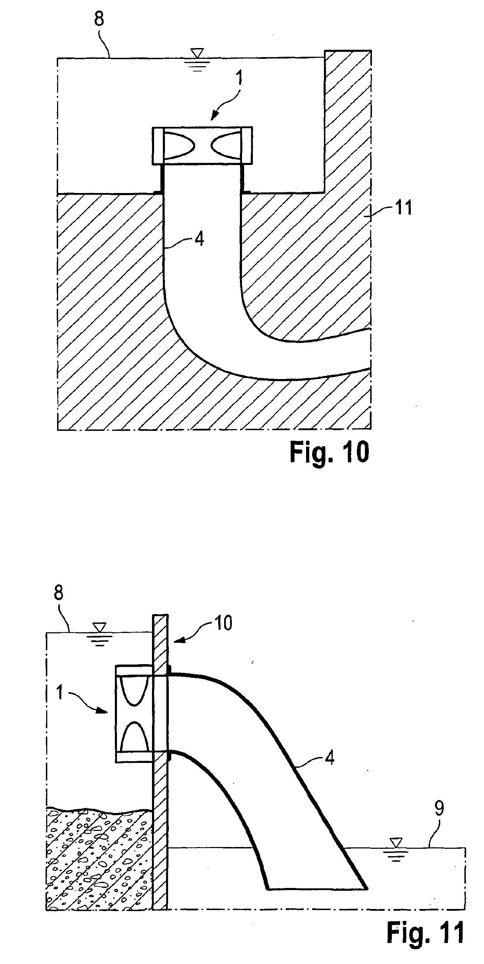

Bei der nicht beanspruchten Ausführungsform gemäß Figur 10 wird eine Energieeinheit 1 vom Oberwasser her vertikal angeströmt. Es schließt sich wiederum ein Saugrohr 4 an, gebildet in einem Baukörper 11 aus Beton.

Bei der nicht beanspruchten Ausführungsform gemäß Figur 11 wird eine Energieeinheit 1 horizontal angeströmt. Die Energieeinheit 1 ist an einen Staudamm 10 angehängt. Das Saugrohr 4 endet unterhalb des Unterwassers 9.

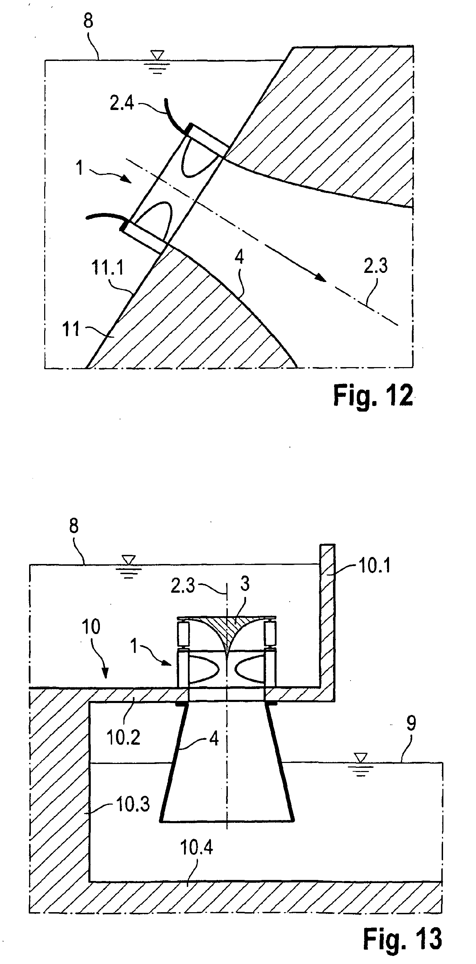

Bei der nicht beanspruchten Ausführungsform gemäß Figur 12 sieht man einen Baukörper 11 aus Beton. Dieser weist eine gegen die Vertikale geneigte Fläche 11.1 auf. Baukörper 11 bildet auch das Saugrohr 4.

Bei der Ausführungsform gemäß Figur 13 strömt das Wasser der Energieeinheit 1 senkrecht zu.

Der Staudamm 10 weist wiederum eine vertikale Wand 10.1 auf. Die horizontale Wand 10.2 befindet sich jedoch stromaufwärts der vertikalen Wand 10.1, somit unterhalb des Oberwassers 8. An die horizontale Wand 10.1 schließt sich eine weitere vertikale Wand 10.3 an, gefolgt von einer weiteren horizontalen Wand 10.4. Das Saugrohr 4 befindet sich in dem von den Wänden 10.2, 10.3 und 10.4 umschlossenen Raum und taucht in das Unterwasser 9 ein.

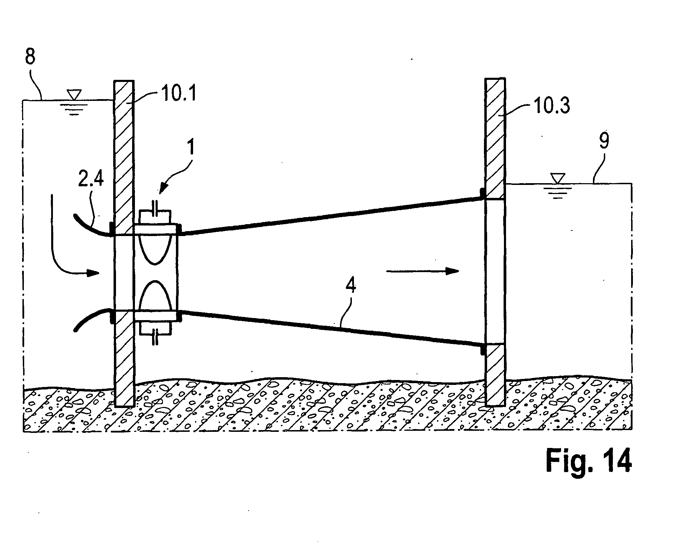

Bei der nicht beanspruchten Ausführungsform gemäß Figur 14 sind zwei vertikale Wände 10.1, 10.3 vorgesehen. Die erste vertikale Wand 10.3 staut das Oberwasser 8 auf. An der ersten vertikalen Wand 10.1 ist die Energieeinheit 1 angehängt. Es folgt das Saugrohr 4. Dieses ist mit seinem stromabwärtigen Ende in der zweiten vertikalen Wand 10.3 gelagert.

Vom Oberwasser 8 kommend wird das Wasser somit umgelenkt, und in die Turbine der Energieeinheit 1 eingeleitet. Es strömt sodann horizontal durch das Saugrohr 4 zum Unterwasser 9.

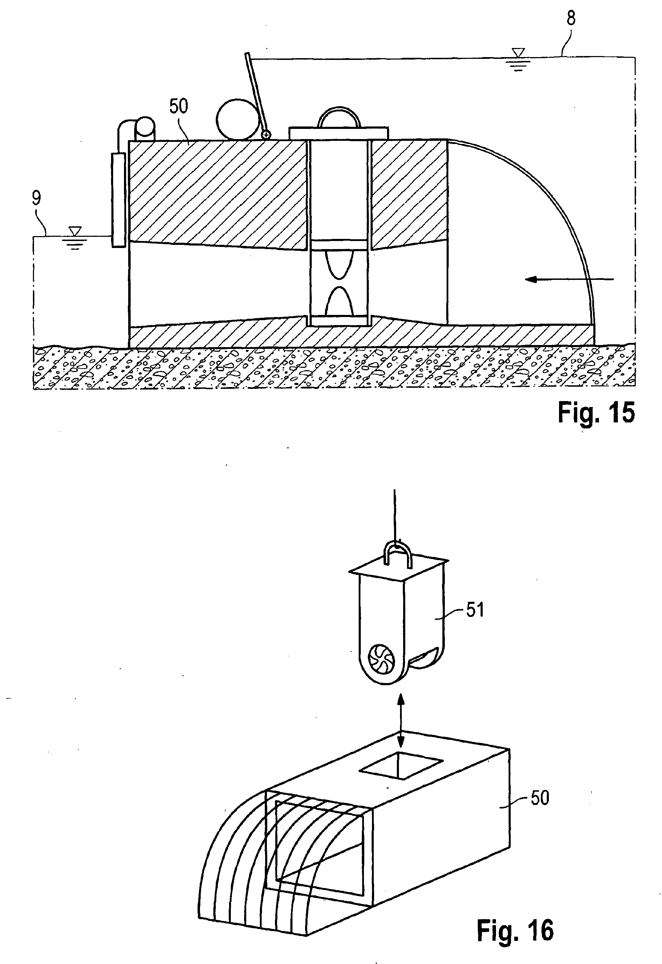

Das in Figur 15 im Schnitt dargestellte Wasserkraftwerk ist ein sogenanntes überströmtes Kraftwerk. Das wichtigste Bauteil ist ein Modul 50, das beispielsweise als Betonkörper ausgeführt ist. Weiterhin ist eine Turbine 2 zu sehen, die gemäß der Figuren 8 und 9 gestaltet ist - mit einem oder zwei oder mehreren Laufrädern.

Modul 50 weist einen vertikalen Schacht auf, siehe auch Figur 6. In den vertikalen Schacht ist eine Kassette 51 von oben her einsetzbar. Die Kassette 51 trägt die komplette Energieeinheit.

Ein einziges Modul kann mehrere solcher Kassetten 51 aufnehmen, und demgemäß auch mehrere Schächte.

Dem Modul ist ein Rechen 5 vorgeschaltet. Der Rechen hat im vorliegenden Ausführungsbeispiel annähernd die Gestalt eines Viertelkreises. Er könnte auch anders gestaltet sein.

Insgesamt ist diese Ausführungsform extrem wirtschaftlich, weil einfach im Aufbau und leicht in der Montage und Wartung.

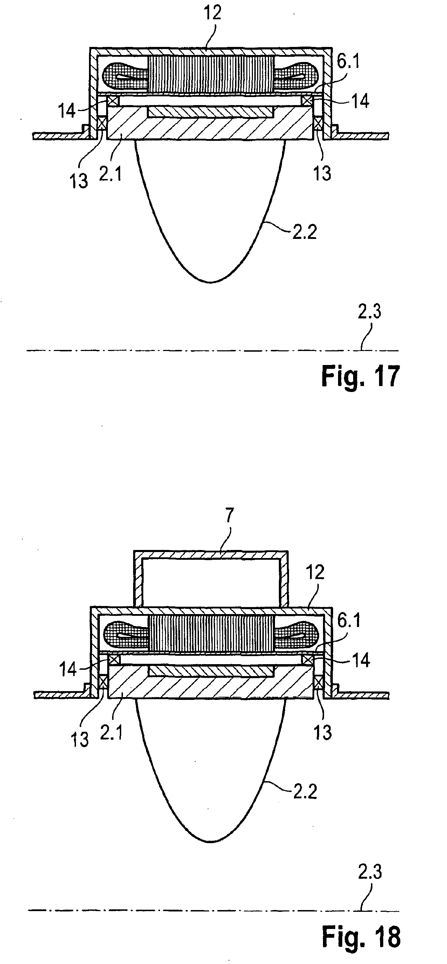

Figur 17 zeigt noch eine Einzelheit bezüglich der Zuordnung von Turbine 2 und Generator 6. Zwischen dem Laufradring 2.1 der Turbine 2 und einem Gehäuse 12 befindet sich ein Axiallager 13, und zwar an beiden axialen Enden des Laufradringes 2.1. Zwischen dem Laufrad 6.1 des Generators 6 und dem Laufradring 2.1 befinden sich Radiallager 14.

Figur 18 zeigt den Gegenstand von Figur 16 mit einer Kühlkammer 7.

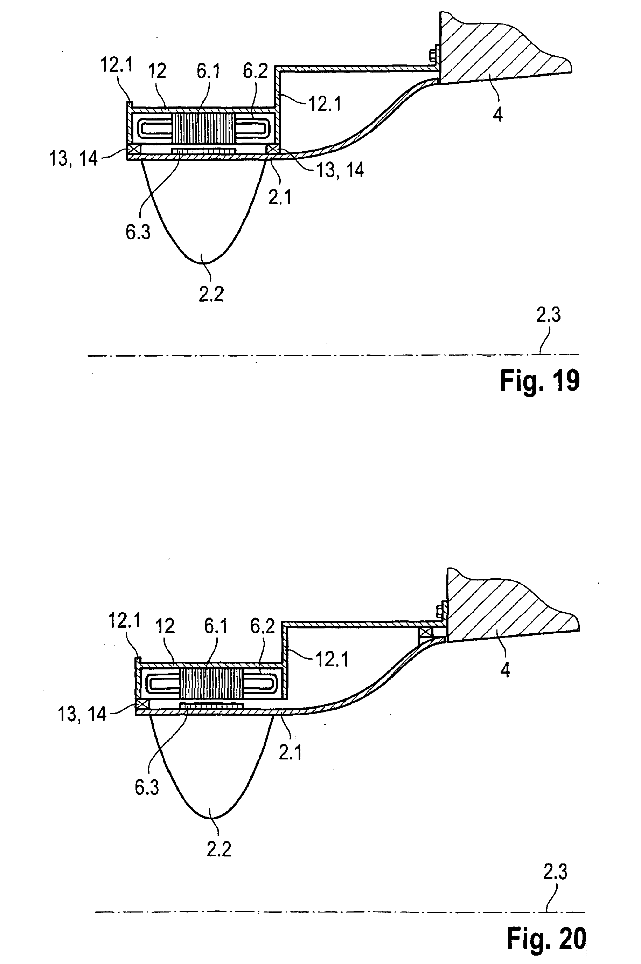

Figur 19 zeigt wiederum in einem Vertikalschnitt, in Strömungsrichtung gelegt, ein Kraftwerk und eine nabenlose Turbine 2. Die Besonderheit hierbei besteht in Folgendem: An den Laufradring 2.1 schließt sich eine Auslaufhülse 2.5 an. Diese ist drehfest mit dem Laufradring 2.1 verbunden, gegebenenfalls auch einteilig mit dieser. Die Auslaufhülse 2.5 hat die Gestalt eines Trompetenrohres. Sie kann auch zylindrisch oder annähernd zylindrisch sein. Sie bringt den folgenden Vorteil: Die Hülse erweitert sich, wie man sieht, analog einem konventionellen Saugrohr.

Da sie jedoch zusammen mit dem Laufradring 2.1 der Turbine 2 umläuft, wird die Gefahr einer Strömungsablösung an den Innenwänden der Auslaufhülse verringert - gegenüber einem Saugrohr mit feststehenden Wänden. Dies bedeutet, dass die Länge der Hülse kleiner sein kann, als die Länge eines konventionellen Saugrohres. Damit werden Baukosten erheblichen Ausmaßes eingespart.

Die genannte Auslaufhülse kann auch bei Turbinen anderer Bauart verwendet werden. Sie muss somit nicht drehfest mit dem Laufrad der Turbine sein.

Die Axialerstreckung der Auslaufhülse kann auch wesentlich geringer sein, als hier dargestellt. Schon eine axiale Länge von 10 Prozent des Durchmessers am Anfang der Auslaufhülse bringt den genannten Vorteil.

### Bezugszeichenliste

- 1: Energieeinheit
- 2: Turbine
- 2.1: Laufradring
- 2.2: Turbinenblätter
- 2.3: Drehachse
- 2.4: Turbineneinlauf
- 2.5: Auslaufhülse
- 3: Leitapparat
- 3.1: Leitschaufeln
- 3.2: Einlaufkonus
- 4: Saugrohr
- 5: Rechen
- 5.1: Rechenaufhängung
- 6: Generator
- 6.1: Statorpaket
- 6.2: Wickelköpfe
- 6.3: Permanentmagnete
- 7: Kühlkammer
- 7.1: Einlass
- 7.2: Auslass
- 7.3: Pumpe
- 7.4: Kühleinrichtung
- 7.5: Pumpe
- 8: Oberwasser
- 9: Unterwasser
- 10: Damm
- 10.1: vertikale Wand
- 10.1.1: kreisförmiger unterer Teil der Aussparung
- 10.1.2: recheckiger oberer Teil der Aussparung
- 10.2: horizontale Wand
- 10.3: vertikale Wand
- 10.4: horizontale Wand
- 11: Baukörper aus Beton
- 11.1: Aufsetzfläche
- 12: Gehäuse
- 12.1: Befestigungsflansche
- 13: Axiallager
- 14: Radiallager
- 50: Modul
- 51: Kassette

## Patentansprüche

1. Wasserkraftwerk, umfassend
eine Energieeinheit (1), die eine Turbine (2) und einen Generator (6) aufweist;
das Laufrad der Turbine (2) umfasst einen Laufradring (2.1) sowie Turbinenblätter (2.2);
die radial äußeren Enden der Turbinenblätter (2.2) sind an der Innenfläche des Laufradringes (2.1) fixiert, und die radial inneren Enden der Turbinenblätter (2.2) sind frei und bilden eine zentrale Durchströmöffnung miteinander;
der Laufradring (2.1) ist vom Generator (6) umschlossen und dient diesem als Lager;
es ist ein Staukasten (50) vorgesehen, auf dessen einer Seite das Oberwasser steht und der von Wasser durchströmt ist;
**gekennzeichnet durch** die folgenden Merkmale:
die Energieeinheit (1) ist von einer Kassette (51) umschlossen;
der Staukasten (50) weist einen Schacht auf, in den die Kassette (51) mit der darin befindlichen Energieeinheit (1) von oben her abgesenkt wird;
der Energieeinheit (1) ist ein Leitapparat (3) vorgeschaltet, der einen radialen Einlass und einen axialen Auslass aufweist;
die Turbinenblätter (2.2) sind - in stromabwärtiger Richtung - gekrümmt.

2. Wasserkraftwerk nach Anspruch 1, **gekennzeichnet durch** die folgenden Merkmale:
der Turbine ist eine Auslaufhülse (4) nachgeschaltet;
die Auslaufhülse (4) ist drehbar gelagert.

3. Wasserkraftwerk nach Anspruch 2, **dadurch gekennzeichnet, dass** die Auslaufhülse (4) vom Laufrad der Turbine angetrieben ist.

4. Wasserkraftwerk nach Anspruch 2 oder 3, **dadurch gekennzeichnet, dass** sich die Auslaufhülse (2.5) in Strömungsrichtung erweitert.

5. Wasserkraftwerk nach einem der Ansprüche 1 bis 4, **dadurch gekennzeichnet, dass** die Energieeinheit in einer Engstelle eines Strömungskanales angeordnet ist.

6. Wasserkraftwerk nach einem der Ansprüche 1 bis 5, **dadurch gekennzeichnet, dass** die Energieeinheit (1) von einer ringförmigen Kühlkammer (7) umschlossen ist, die einen Einlass (7.1) und einen Auslass (7.2) für ein Kühlmedium aufweist.

7. Wasserkraftwerk nach Anspruch 6, **dadurch gekennzeichnet, dass** die Kühlkammer (7) Bestandteil eines geschlossenen oder offenen Kühlkreislaufes ist.

## Claims

1. A hydroelectric power plant, comprising
1.1 a power unit (1) having a turbine (2) and a generator (6);
1.2 the blade wheel of the turbine (2) comprises a blade wheel ring (2.1) and turbine blades (2.2);
1.3 the radially outer ends of the turbine blades (2.2) are fixed to the inner surface of the blade wheel ring (2.1), and the radially inner ends of the turbine blades (2.2) are free and form a central cross-flow opening with one another;
1.4 the blade wheel ring (2.2) is enclosed by the generator (6) and is used as a bearing for the same;
1.5 a retaining box (50) is provided, with the upstream water standing on the one side thereof and water flowing through said box;
**characterized by** the following features:
1.6 the power unit (1) is enclosed by a cassette (51);
1.7 the retaining box (50) comprises a shaft into which the cassette (51) with the power unit (1) disposed therein can be lowered from above;
1.8 a distributor (3) is disposed upstream of the power unit (1), which distributor comprises a radial inlet and an axial outlet;
1.9 the turbine blades (2.2) are curved in the downstream direction.

2. A hydroelectric power plant according to claim 1, **characterized by** the following features:
2.1 an outlet sleeve (4) is connected downstream of the turbine;
2.2 the outlet sleeve (4) is rotatably mounted.

3. A hydroelectric power plant according to claim 2, **characterized in that** the outlet sleeve (4) is driven by the blade wheel of the turbine.

4. A hydroelectric power plant according to claim 2 or 3, **characterized in that** the outlet sleeve (2.5) expands in the direction of flow.

5. A hydroelectric power plant according to one of the claims 1 to 4, **characterized in that** the power unit is arranged at a constriction of a flow channel.

6. A hydroelectric power plant according to one of the claims 1 to 5, **characterized in that** the power unit (1) is enclosed by an annular cooling chamber (7) which comprises an inlet (7.1) and an outlet (7.2) for a cooling medium.

7. A hydroelectric power plant according to claim 6, **characterized in that** the cooling chamber (6) is a component of a closed or open cooling circuit.

## Revendications

1. Centrale hydroélectrique, comprenant
une unité énergétique (1), présentant une turbine (2) et un générateur (6); le rotor de la turbine (2) comporte une bague de rotor (2.1) de même que des pales de turbine (2.2);
les extrémités radialement externes des pales de turbine (2.2) sont fixées à la face interne de la bague de rotor (2.1), et les extrémités radialement internes des pales de turbine (2.2) sont libres et forment ensemble une ouverture de passage centrale;
la bague de rotor (2.1) est entourée par le générateur (6) et lui sert de palier;
il est prévu un caisson de stockage (50), sur un côté duquel se trouve le bief supérieur et qui est parcouru d'eau;
présentant les caractéristiques suivantes:
l'unité énergétique (1) est entourée d'une cassette (51);
le caisson de stockage (50) présente un puits, dans lequel la cassette (51) avec l'unité énergétique (1) située à l'intérieur est abaissée depuis point supérieur;
l'unité énergétique (1) est précédée d'un appareil directeur (3), comportant une entrée radiale et une sortie axiale;
les pales de turbine (2.2) sont incurvées dans la direction avale.

2. Centrale hydroélectrique selon la revendication 1, présentant les caractéristiques suivantes:
la turbine est suivie d'une douille d'écartement (4);
la douille d'écartement (4) est montée rotative.

3. Centrale hydroélectrique selon la revendication 2, **caractérisée en ce que** la douille d'écartement (4) est entraînée par le rotor de la turbine.

4. Centrale hydroélectrique selon la revendication 2 ou 3, **caractérisée en ce que** la douille d'écartement (2.5) s'élargit dans le sens d'écoulement.

5. Centrale hydroélectrique selon l'une des revendications 1 à 4, **caractérisée en ce que** l'unité énergétique est disposée dans un rétrécissement d'un canal d'écoulement.

6. Centrale hydroélectrique selon l'une des revendications 1 à 5, **caractérisée en ce que** l'unité énergétique (1) est entourée d'une chambre de refroidissement annulaire (7), présentant une entrée (7.1) et une sortie (7.2) pour fluide de refroidissement.

7. Centrale hydroélectrique selon la revendication 6, **caractérisée en ce que** la chambre de refroidissement (7) fait partie d'une circuit de refroidissement fermé ou ouvert.
